Europäisches Patentamt

European Patent Office

Office européen des brevets

(19)

(11) Numéro de publication: **0 280 584**
**A1**

# (12) DEMANDE DE BREVET EUROPEEN

(21) Numéro de dépôt: **88400060.5**

(22) Date de dépôt: **13.01.88**

(51) Int. Cl.⁴: **G 02 B 6/06**
**F 21 S 5/00, G 02 B 6/04**

(30) Priorité: **16.01.87 FR 8700450**

(43) Date de publication de la demande:
**31.08.88 Bulletin 88/35**

(84) Etats contractants désignés: **DE GB**

(71) Demandeur: **THOMSON-CSF**
**173, Boulevard Haussmann**
**F-75379 Paris Cédex 08 (FR)**

(72) Inventeur: **Cheysson, Françoise**
**THOMSON-CSF SCPI 19, avenue de Messine**
**F-75008 Paris (FR)**

**Migozzi, Jean-Blaise**
**THOMSON-CSF SCPI 19, avenue de Messine**
**F-75008 Paris (FR)**

(74) Mandataire: **Trocellier, Roger et al**
**THOMSON-CSF SCPI 19, avenue de Messine**
**F-75008 Paris (FR)**

(54) **Source de lumière froide à forte luminance, et utilisation pour un dispositif de visualisation d'images.**

(57) La solution permet de réaliser une source de lumière de très forte luminance sans dégagement de chaleur, ni consommation électrique, ou avec une consommation très faible dans le cas d'utilisation d'une source primaire annexe, et qui présente un encombrement réduit.

La source est constituée au moyen de plusieurs fibres optiques fluorescentes (F1 à Fn) qui sont regroupées de préférence par leurs deux extrémités pour former une surface émettrice (SE) d'un rayonnement visible ($\lambda 2$) sous l'action d'un rayonnement extérieur ($\lambda 1$) pénétrant par les gaines des fibres. Elles sont avantageusement combinées avec une source primaire (SP) qui émet le rayonnement ($\lambda 1$) à absorber. Une utilisation avantageuse pour la visualisation d'image est l'éclairage d'une matrice de cristaux liquides.

L'invention s'applique notamment aux visualisations de bord tête basse et/ou tête haute et aux viseurs de casque.

FIG_3

EP 0 280 584 A1

**Description**

SOURCE DE LUMIERE FROIDE A FORTE LUMINANCE ET UTILISATION POUR UN DISPOSITIF DE VISUALISATION D'IMAGES

La présente invention concerne une source de lumière froide à forte luminance dont l'utilisation est plus particulièrement envisagée pour éclairer une matrice de cristaux liquides d'un dispositif de visualisation d'image.

L'invention permet de réaliser une source de lumière de très forte luminance, sans dégagement de chaleur à proximité de la surface émissive. Cette source froide émet un rayonnement dont la longueur d'onde et la largeur spectrale peuvent être choisies dans un domaine étendu. Elle utilise le rayonnement ambiant ou, pour l'obtention d'un meilleur rendement, une source primaire de faible consommation électrique et qui peut être éloignée de la surface émissive.

Une telle source de lumière froide présente de grands intérêts dans tous les domaines techniques qui requièrent une forte luminance, une faible dissipation calorifique, une consommation électrique minime et un faible encombrement. Ces impératifs répondent notamment pour l'éclairage d'une matrice de cristaux liquides.

En général, la réalisation d'une source de forte luminance s'effectue à partir d'un arc électrique, ou d'un filament incandescent. Ces techniques nécessitent une puissance électrique importante dont une large part est transformée en énergie calorifique. Ces sources présentent donc deux inconvénients majeurs qui sont une consommation électrique élevée et un fort dégagement de chaleur.

Le but de l'invention est de remédier à ces inconvénients tout en procurant une source de forte luminance. De plus, cette forte luminance est obtenue sur une surface qui peut être éloignée d'une source d'énergie primaire utilisée, ce qui permet de réduire l'encombrement local. Par ailleurs, la longueur d'onde d'émission et la largeur de la bande spectrale d'émission peuvent être choisies lors de la fabrication de la source. Il est possible d'envisager également la réalisation d'une source qui émet dans plusieurs domaines spectraux.

L'invention utilise le phénomène de fluorescence dans des fibres optiques. La fluorescence est la propriété qu'ont certains corps d'émettre de la lumière lorsqu'ils reçoivent un rayonnement qui peut être invisible (rayons ultraviolets). Il existe des fibres optiques qui deviennent fluorescentes sous l'influence d'un rayonnement ambiant, ultraviolet par exemple. Le rayonnement traverse la gaine et est absorbé dans le coeur de la fibre qui comporte un dopant fluorescent qui émet alors de la lumière dans la fibre. Cette lumière est canalisée vers les deux extrémités de la fibre.

Suivant l'invention, il est réalisé une source de lumière froide à forte luminance caractérisée en ce qu'elle comporte une pluralité de fibres optiques fluorescentes sous l'action d'un rayonnement extérieur, la lumière visible créée par fluorescence dans ces fibres étant véhiculée vers les extrémités, lesdites fibres étant regroupées en un faisceau au moins par une de leur partie terminale en sorte que les extrémités correspondantes sont juxtaposées et délimitent une surface émettrice à haute luminance qui constitue la source de lumière froide.

Les particularités de l'invention apparaîtront dans la description qui suit, donnée à titre d'exemple à l'aide des figures annexées qui représentent :

    - Fig.1, un schéma de rappel du principe de fluorescence dans une fibre, utilisé selon l'invention ;

    - Fig.2, un mode de réalisation d'une source de lumière froide conformément à l'invention ;

    - Fig.3, un autre mode de réalisation d'une source de lumière froide conformément à l'invention ;

    - Fig.4, un schéma partiel relatif à l'utilisation d'un tube d'éclairage comme source primaire, les fibres étant rangées autour du tube ;

    - Fig.5, un schéma de rangement des fibres en extrémité pour produire une lumière polychrome à l'aide de trois catégories de fibres émettrices respectivement en rouge, vert et bleu ;

    - Fig.6, un schéma d'utilisation de la source froide pour éclairer un plan, notamment une matrice de cristaux liquides d'un dispositif de visualisation d'image, pour réaliser par exemple un viseur tête haute aéroporté ;

    - Fig.7, un autre schéma d'utilisation de la source froide pour éclairer un plan, notamment une matrice de cristaux liquides d'un dispositif de visualisation d'image, pour réaliser par exemple un viseur de casque ;

    - Fig.8, un schéma d'utilisation de la source froide comme éclairage secours d'un plan de visualisation ;

    - Fig.9, un schéma d'utilisation de la source froide comme éclairage d'un plan avec asservissement de l'éclairage aux fluctuations du rayonnement ambiant.

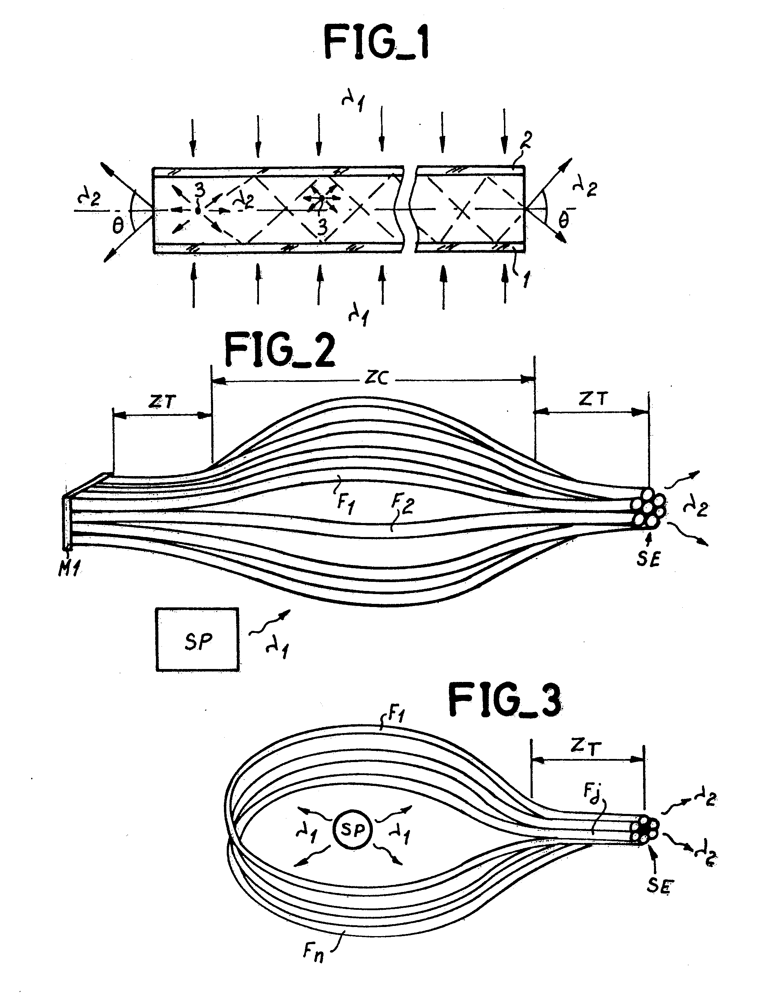

La figure 1 représente une fibre optique composée conventionnellement d'une gaine 1 et d'un coeur 2 selon une disposition coaxiale, ces deux éléments étant en matériau transparent d'indice de réfraction différent, en sorte qu'un rayonnement lumineux qui circule dans le coeur se réfléchit sur les parois entre le coeur et la gaine et par réflexions successives est véhiculée, aux pertes près, vers l'extrémité correspondant au sens de la propagation. Dans le cas d'une fibre optique fluorescente, la gaine extérieure 1 est elle-même non protégée du rayonnement ambiant, en sorte de pouvoir absorber un rayonnement ambiant correspondant à une bande spectrale donnée. On désignera ce rayonnement extérieur par la longueur d'onde $\lambda$ 1. Il traverse la gaine 1 et pénètre dans le coeur 2. Les corpuscules 3 constituant un dopant fluorescent sont alors excités et on a émission d'une lumière visible par fluorescence, dont la majeure partie est guidée par ce conducteur de lumière vers l'une et l'autre des extrémités . La fibre a ainsi absorbée un rayonnement haute fréquence de longueur d'onde $\lambda 1$ à travers la surface latérale et qui peut être reçu dans un angle solide de $4\pi$ steradians ; elle émet un rayonnement visible dont la longueur d'onde $\lambda 2$ et la largeur spectrale dépendent du dopant fluorescent 3 utilisé et peuvent donc être modifiées. La longueur d'onde d'émission $\lambda 2$ est supérieure à la longueur d'onde d'excitation $\lambda 1$. Le rayonnement visible $\lambda 2$ est émis par les surfaces terminales de la fibre dans un angle    qui est fonction de l'ouverture numérique de la fibre. La fibre permet de diminuer le rapport des surfaces réceptrice (gaine) et émettrices (faces terminales) et obtenir une concentration lumineuse de rayonnement visible.

La source froide est réalisée au moyen d'une pluralité de fibres optiques fluorescentes qui sont regroupées dans leurs parties terminales, au moins par une de ces parties, pour former un faisceau et en sorte que les surfaces d'extrémité soient juxtaposées et délimitent la surface émettrice à haute luminosité qui constitue la source de lumière froide.

La figure 2 représente un tel groupement de n fibres F1, F2,... Fn, qui sont relativement dispersées et écartées l'une de l'autre dans leur zone centrale ZC pour faciliter la réception du rayonnement $\lambda 1$ par leur surface latérale de gaine ; les fibres sont regroupées respectivement dans les deux zones terminales ZT pour former un faisceau et pour juxtaposer selon une surface émettrice SE, par exemple plane, les faces d'extrémité des n fibres. Pour ne former qu'une seule source froide et éviter de perdre l'énergie lumineuse produite à l'autre extrémité des fibres, celles-ci sont regroupées de même manière et accolées suivant une surface de préférence plane sur laquelle on a collé un miroir plan M1 qui permet de renvoyer le rayonnement vers l'extrémité émettrice SE.

Une autre solution selon la figure 3 consiste à regrouper les 2 n extrémités des fibres en un unique faisceau pour former la surface émettrice SE.

Le rayonnement de longueur d'onde $\lambda 1$ peut provenir de l'éclairage ambiant, par exemple le rayonnement ultraviolet compris dans le rayonnement solaire. Pour avoir un meilleur rendement et une plus grande stabilité de la luminance produite, les fibres coopèrent avantageusement avec une source primaire SP qui produit ce rayonnement $\lambda 1$. Cette source primaire peut être très proche des fibres ou disposée à distance, selon le type d'application envisagé. L'utilisation d'une source primaire SP permet d'accroître la quantité d'énergie lumineuse captée, notamment si cette source est très proche. Si la source primaire est par contre éloignée, la luminance produite sera moins élevée mais le montage source froide devient moins encombrant.

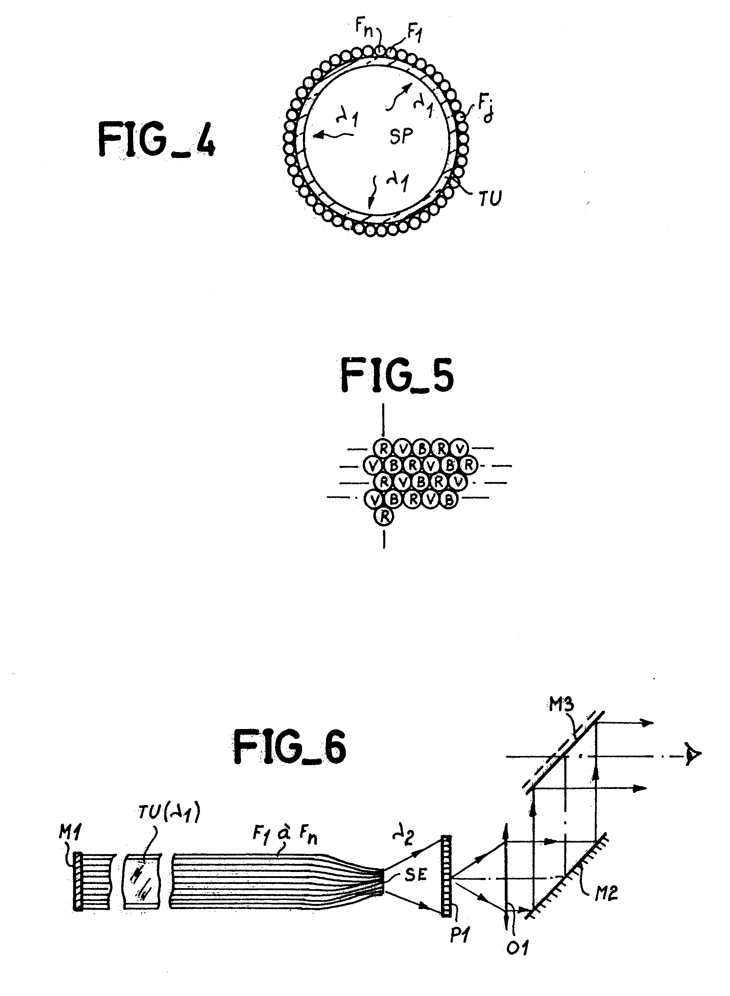

La source primaire SP peut être par exemple un tube d'éclairage TU (par exemple un tube luminescent à néon) qui émet un fort pourcentage d'ultraviolets. La figure 4 montre en coupe transversale une possibilité de rangement des fibres autour de ce tube, les fibres étant dans cet exemple alignées selon les génératrices.

Les fibres fluorescentes présentent une longueur de saturation, de l'ordre du mètre, au-delà de laquelle le rayonnement haute fréquence $\lambda 1$ absorbé donne un rayonnement visible qui sera lui-même réabsorbé par les molécules fluorescentes au cours du cheminement dans la fibre. Il n'est donc pas possible d'augmenter la luminance en augmentant la longueur au-delà de cette valeur limite de saturation, valeur qui dépend en particulier de la concentration en dopant fluorescent 3 dans le coeur 2 de la fibre.

Par contre, il est possible d'augmenter la surface émissive, à luminance fixée par les critères précités, en augmentant le nombre de fibres exposées et en rassemblant les deux extrémités des fibres en un faisceau unique comme dans le cas de la figure 3.

Il est possible de prévoir des fibres dopées avec des colorants différents qui de ce fait réémettent à des longueurs d'ondes visibles différentes de manière à créer une source polychrome. Pour une telle utilisation, on peut utiliser les colorants qui répondent à des longueurs d'onde $\lambda 1a$, $\lambda 1b$,... absorbées voisines, en sorte d'avoir éventuellement une source primaire SP unique qui émet dans une bande englobant les différentes longueurs d'onde $\lambda 1$. Avec trois dopants différents on peut former en visible les teintes conventionnelles rouge R, vert V, bleu B. La figure 5 montre le rangement des faces d'extrémité des fibres pour créer les teintes désirées, notamment une lumière blanche. Chaque fibre avec deux quelconques voisines constitue un triplet RVB c'est-à-dire un pixel couleur.

Le montage à fibres ainsi constitué peut être de longueur ou d'encombrement variable adaptable à chaque utilisation spécifique de la source froide. Ceci permet d'éloigner la source primaire et la zone des fibres exposées de la surface émissive visible qui est en extrémité du faisceau sans perte de luminance.

On peut ainsi utiliser l'extrémité SE du faisceau de fibres optiques fluorescentes comme source d'éclairage très puissante pour éclairer un plan quelconque P1 comme représenté sur la figure 6. Ce plan P1 correspond à une matrice de cristaux liquides à un tableau de bord, etc .....

A noter également que la surface émissive SE peut être produite plane ou courbe (convexe, concave, etc ....).

La figure 6 représente une application pour un imageur à cristaux liquides, par exemple pour une installation viseur tête haute aéroportée à l'aide d'un miroir de renvoi M2 et d'une glace partiellement transparente M3 à travers laquelle le pilote voit en superposition le paysage et l'image de la matrice P1 collimatée par une optique O1. Les fibres sont disposées, par exemple selon des génératrices, autour d'un tube d'éclairage TU formant la source primaire.

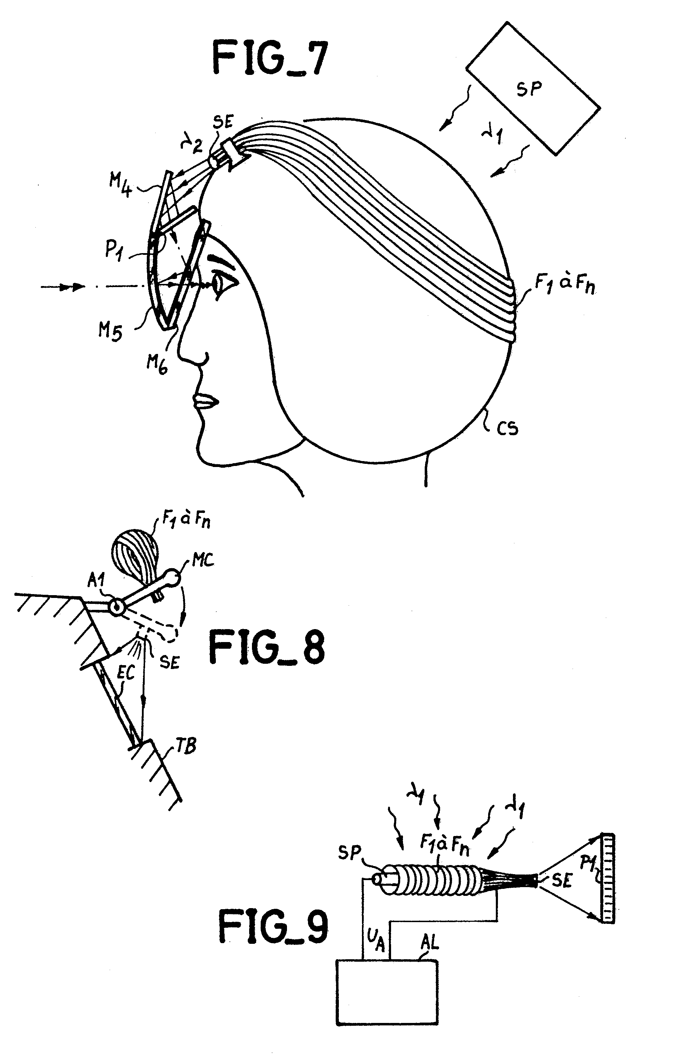

La figure 7 se rapporte à une utilisation toujours pour l'éclairage d'une matrice P1 de cristaux liquides mais montée sur un viseur de casque. Les fibres optiques F1 à Fn sont disposées sur le casque CS, juxtaposées les unes à côté des autres. Elles reçoivent la lumière d'une source primaire SP, par exemple un plafonnier monté dans le cokpit de l'avion et qui émet en ultraviolet pour ne pas gêner le pilote. Les fibres groupées en un faisceau unique de sortie éclairent la matrice P1 par renvoi sur un miroir M4, l'image lumineuse étant collimatée par un ensemble optique groupant un miroir sphérique M5 partiellement transparent et un miroir plan partiellement transparent M6. Les éléments M5 et M6 peuvent être holographiques. L'encombrement est minime au niveau de la source émettrice SE. Ainsi, le dispositif d'éclairage monté sur le casque est dépourvu de source électrique et sans liaison extérieures.

Comme on l'a vu, la source de lumière froide conforme à l'invention permet un éclairage monochromatique ou polychromatique d'un plan, par exemple une matrice de cristaux liquides. De telles matrices peuvent être utilisées elles-mêmes comme écran de visualisation en avionique. Dans ce cas, on utilise une source primaire placée dans un endroit de l'avion où l'encombrement n'est pas critique. Les fibres comme représentées sur la figure 6 sont bobinées autour de cette source afin d'obtenir un fort éclairement. On rassemble les extrémités des fibres en un faisceau pour que la surface émissive globale obtenue permette d'éclairer la matrice de cristaux liquides. L'encombrement est donc minimisé au niveau de la source émissive dans le visible. Un tel écran de visualisation sert en particulier pour un viseur tête haute et permet·de libérer de la place dans la planche de bord.

On peut également utiliser ce principe pour éclairer des petites surfaces pour lesquelles on a besoin d'un éclairement primaire plus faible ce qui autorise un éloignement de la source primaire. On peut par exemple utiliser un plafonnier ultra-violet émettant un rayonnement invisible à l'oeil nu et monter les fibres optiques absorbant les ultras-violets et émettant un rayonnement visible sur un agencement mobile, par exemple un casque. Dans ce cas les fibres tapissent la surface extérieure du casque et sont rassemblées en un court faisceau. L'extrémité du faisceau constitue la source d'éclairage d'une matrice d'image d'un collimateur de pilotage monté sur le casque pour l'application viseur de casque. Le viseur est ainsi libéré de tout lien matériel avec le reste de la cabine.

Une autre utilisation possible est en tant que système d'éclairage de secours de jour pour un tableau de bord. On utilise alors des fibres optiques qui sont éclairées par la lumière solaire et dont les extrémités sont assemblées en un faisceau qui peut, en cas de nécessité, être approché pour éclairer tout ou partie du tableau de bord. Une telle disposition est illustrée par la figure 8 où les fibres F1 à Fn selon un montage du type représenté à la figure 3 sont portées par un dispositif mécanique MC orientable autour d'un axe A1 pour venir éclairer, en cas de nécessité (position en pointillé), un cadran EC du tableau de bord TB.

La source de lumière froide SE peut être utilisée également comme illustré figure 9, pour asservir l'éclairage d'un écran de visualisation P1 en fonction de l'intensité de l'éclairage ambiant. Les fibres fluorescentes F1 à Fn captent le rayonnement $\lambda 1$ présent dans la lumière ambiante ainsi que la lumière émise à cette longueur d'onde par une source primaire SP. La luminance réémise par la surface SE fluctue donc autour d'une valeur moyenne fixe imposée par la source primaire en fonction des variations présentées par la lumière ambiante. L'ensemble est déterminé en sorte que pour un éclairage ambiant moyen l'écran P1 est correctement éclairé par la source froide SE. Les fluctuations précitées produisent un asservissement automatique de l'éclairage du cadran. En effet, si l'éclairage ambiant diminue, l'éclairage de l'écran diminue aussi et ne risque pas de devenir trop vif ; si par contre la lumière ambiante augmente, l'éclairage de l'écran fait de même et permet de préserver la visualisation de l'affichage pour l'observateur.

## Revendications

1. Source de lumière froide à forte luminance, caractérisée en ce qu'elle comporte une pluralité de fibres optiques fluorescentes (F1 à Fn) sous l'action d'un rayonnement extérieur ( $\lambda 1$), la lumière visible créée par fluorescence dans les fibres étant véhiculée par celles-ci vers les extrémités, lesdites fibres étant regroupées en un faisceau au moins par une de leurs deux parties terminales (ZT) en sorte que les extrémités correspondantes sont juxtaposées et délimitent une surface émettrice (SE) à haute luminance constituant ladite source de lumière froide.

2. Source selon la revendication 1, caractérisée en ce que les fibres (F1 à Fn) sont regroupées en un faisceau en chacune de leurs parties terminales (ZT) en sorte que l'une de ces parties constitue ladite source de lumière froide, l'autre partie comportant un miroir (M1) collé sur les extrémités pour renvoyer la lumière dans les fibres vers ladite surface émettrice (SE).

3. Source selon la revendication 1, caractérisée en ce les deux parties terminales sont réunies en un faisceau pour former une surface émettrice (SE) de grande dimension.

4. Source selon l'une quelconque des revendications 1 à 3, caractérisée en ce que ledit rayonnement extérieur ( $\lambda 1$) est fourni par le rayonnement solaire ambiant.

5. Source selon l'une quelconque des revendications 1 à 3, caractérisée en ce que ledit rayonnement extérieur est fourni par une source primaire (SP) émettrice dans une bande choisie en relation avec celle d'absorption présentée par les fibres.

6. Source selon la revendication 5, caractérisée en ce que les fibres sont placées à proximité de la source primaire (SP).

7. Source selon la revendication 5, caractérisée en ce que les fibres sont disposées à distance de la source primaire (SP).

8. Source selon l'une quelconque des revendications 5 à 7, caractérisée en ce que la source primaire (SP) délivre un rayonnement ultraviolet.

9. Source selon la revendication 8, caractérisée en ce que la source primaire est constituée par un tube d'éclairage (TU).

10. Source selon l'une quelconque des revendications précédentes, caractérisée en ce que les fibres optiques fluorescentes (F1 à Fn) sont identiques et fournissent en ladite surface émettrice une lumière monochrome.

11. Source selon l'une quelconque des revendications 1 à 9, caractérisée en ce que les fibres optiques fluorescentes (F1 à Fn) sont de trois catégories différentes de manière à fournir, pour une première partie d'entre elles une lumière monochromatique rouge (R) en ladite surface émettrice, pour une seconde partie d'entre elles une lumière bleue (B) et pour une troisième partie une lumière verte (V), les extrémités étant arrangées en ladite surface émettrice (SE) pour que chaque extrémité de fibres avec ses voisines permette de constituer un triplet rouge-vert-bleu dans n'importe quelle situation de manière à obtenir une lumière polychrome, voire blanche.

12. Dispositif de visualisation utilisant une source selon l'une quelconque des revendications précédentes, caractérisé en ce que le dispositif de visualisation comporte un plan de visualisation (P1) éclairé par ladite source froide (SE).

13. Dispositif de visualisation selon la revendication 12, caractérisé en ce que ledit plan de visualisation (P1) comporte une matrice de cristaux liquides.

14. Dispositif de visualisation selon la revendication 13, caractérisé en ce que la matrice (P1) est utilisée pour constituer un dispositif de visualisation tête basse ou tête haute monté sur un tableau de bord d'avion.

15. Dispositif de visualisation selon la revendication 12 ou 13 dans lequel la source froide (SE) est utilisée en éclairement de secours d'un plan de visualisation (EC) normalement éclairé par l'éclairage ambiant.

16. Dispositif de visualisation selon l'un des ensembles des revendications 5 et 12, ou 5 et 13, caractérisé en ce que la source froide (SE) est produite conjointement en utilisant une source primaire (SP) pour obtenir une valeur moyenne de luminance et l'éclairage ambiant pour asservir l'éclairage d'un plan devisualisation (P1) aux fluctuations de l'éclairage ambiant.

17. Dispositif de visualisation selon la revendication 13, caractérisé en ce qu'il est monté sur un casque (CS) pour constituer un viseur de casque.

18. Dispositif de visualisation selon la revendication 17, caractérisé en ce que les fibres optiques fluorescentes (F1 à Fn) sont disposées sur le casque (CS) et éclairées par une source primaire (SP) montée en plafonnier dans le cockpit de l'avion.

0280584

# FIG_1

# FIG_2

# FIG_3

**FIG_4**

**FIG_5**

**FIG_6**

FIG_7

0280584

FIG_8

FIG_9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 403 826 (H. PRESBY)<br>* Colonne 1, lignes 53-56; colonne 2, lignes 21-23; figure 1 *<br>--- | 1,5,7,<br>10 | G 02 B 6/06<br>F 21 S 5/00<br>G 02 B 6/04 |
| A | US-A-4 467 208 (G. MÜLLER)<br>* Figures 1,3; colonne 1, lignes 6-10,34-42; colonne 2, lignes 28-37 *<br>--- | 1,3-5,<br>10 | |
| A | NAVY TECHNICAL DISCLOSURE BULLETIN, vol. 2, no. 7, juillet 1977, pages 15-20, San Diego, California, US; P.C. FLETCHER et al.: "Liquid crystal-fiber optic cockpit display"<br>* Figure 2; page 17, lignes 13-22; page 18, lignes 2-18 *<br>--- | 6,8-10,<br>12,13 | |
| A | US-A-4 272 156 (K. ISHIBASHI et al.)<br>* Figures 1,4,5; colonne 7, lignes 48-52; colonne 2, lignes 27-33 *<br>--- | 1,3,10 | |
| A | US-A-3 833 300 (W. RYMES)<br>* Figure 1; colonne 1, lignes 35-38; colonne 2, lignes 24-26 *<br>--- | 14,17 | **DOMAINES TECHNIQUES RECHERCHES (Int. Cl.4)** |
| A | US-A-4 234 910 (L. PRICE)<br>* Figures 1,2; colonne 1, lignes 8-11,16-19; colonne 3, lignes 21,22; colonne 4, lignes 4-7 *<br>--- | 1,6,10,<br>14,17 | F 21 S 5/00<br>G 02 B 6/10<br>G 02 B 6/04<br>G 01 J 1/58<br>G 01 D 5/26<br>G 02 B 6/06 |
| A | FR-A-2 564 983 (COMMISSARIAT A L'ENERGIE ATOMIQUE)<br>* Revendications; figures *<br>--- | 1,2 | |
| A | DE-A-2 950 790 (SIEMENS AG)<br>* Revendications; figure 2 *<br>----- | 1 | |

Le présent rapport a été établi pour toutes les revendications

| Lieu de la recherche | Date d'achèvement de la recherche | Examinateur |
|---|---|---|
| LA HAYE | 26-04-1988 | WESBY P.B. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................
& : membre de la même famille, document correspondant